# EUROPEAN PATENT SPECIFICATION

(11) **EP 2 385 516 B1**
(45) Date of publication and mention of the grant of the patent: **22.10.2014**
(21) Application number: 11176516.0
(22) Date of filing: 23.03.2009
(51) Int. Cl.: G09G 3/36

(54) **Liquid crystal display device and liquid crystal display method**
Flüssigkristallanzeigevorrichtung und Flüssigkristallanzeigeverfahren
Dispositif d'affichage à cristaux liquides et procédé d'affichage à cristaux liquides

(30) Priority: 24.03.2008 JP 2008075696; 24.03.2008 JP 2008075697
(43) Date of publication of application: 09.11.2011
(62) Divisional of application: 09155833.8
(73) Proprietor: Sony Corporation, Tokyo 108-0075 (JP)
(72) Inventor: Kamada, Tsuyoshi, Tokyo 108-0075 (JP); Suzuki, Toshiaki, Tokyo 108-0075 (JP); Nukiyama, Kazuhiro, Tokyo 108-0075 (JP)
(74) Representative: Witte, Weller & Partner Patentanwälte mbB

(56) References cited:
- JP-A- 11 352 938
- JP-A- H06 222 330
- US-A1- 2002 024 482
- US-A1- 2003 038 766
- US-A1- 2005 122 295
- US-A1- 2006 007 094
- US-A1- 2007 063 952

## Description

### BACKGROUND OF THE INVENTION

### 1. Field of the Invention

The present invention relates to a liquid crystal display device, a liquid crystal display method, a display control device, and a display control method. The present invention relates more specifically to a liquid crystal display device, a liquid crystal display method, a display control device, and a display control method that are capable of suppressing the occurrence of inconsistencies in the form of streaks without the size of a thin-film transistor (TFT) being increased.

### 2. Description of the Related Art

Document JP H06 222330 discloses a technique for scanning a liquid crystal display wherein the image corresponding to a whole screen is scanned by means of two frames, each frame consisting of an odd sub-frame where only odd lines are scanned (SF1 corresponding to an odd sub-frame of frame one, SF3 corresponding to an odd sub-frame of frame two) followed by an even sub-frame where only even lines are scanned (SF2 corresponding to an even sub-frame of frame one, SF4 corresponding to an even sub-frame of frame two), wherein subsequent odd and even sub-frames (SF1,SF2; SF3,SF4) are associated respectively to different areas of the screen and wherein a polarity signal is inverted when switching between odd and even sub-frames - see figures 10 and 12. US 2007/063952 discloses driving methods and devices. In a representative method, Nth and (N+K) throws of pixels are scanned sequentially and a signal of a first polarity is provided in sequence to the Nth and (N+K) throws of scanned pixels, during a first period of a frame period. During a second period of the frame period, (N+1)th and (N+K+1)th rows of pixels are scanned sequentially and a signal of a second polarity is provided in sequence to the (N+1)th and (N+K+1)th rows of scanned pixels, wherein N and K are both integers, N>0, K is even and K>1.

US 2005/122295 discloses a liquid crystal display that is driven at a frame frequency of 100 Hz or higher. There are provided a base frame counter and a source control signal generator section controlling the polarity of the liquid crystal in pixels so as to alternately repeat, for each frame, a horizontal reversal once every m lines (m is 2 or a greater positive integer) and a horizontal reversal once every m lines after shifting the polarity of the lines in the preceding frame by n lines (n is a positive integer equal to a half or less of m). The provision achieves a liquid crystal display and a method of driving the display, addresses insufficient charging at higher frame frequencies and accomplishing higher display quality.

US 2003/038766 discloses a line inversion type liquid crystal display and a driving method thereof. A plurality of pixels arranged in a matrix, a plurality of data lines extending in a row direction and a plurality of gate lines extending in a column direction are disposed in a liquid crystal panel of the liquid crystal display. The pixel has a liquid crystal capacitor for performing display operation and a switching element turned on in response to a gate-on voltage to apply a data signal to the liquid crystal capacitor.

A gate driver sequentially provides gate-on pulses to the gate lines based on gate control signals from a timing controller, and a data driver sequentially applies the data signals with polarity inversion, corresponding to coior signals from the timing controller based on the data control signal from the timing controller. The polarity of the data signals is inverted by the unit of at least two pixel rows. Since the width of the gate-on pulse applied to the first pixel row with polarity inversion is larger than that of other gate-on pulses, a charging ratio of the first pixel row with polarity inversion is larger than that of the other rows.

US 2002/024482 discloses a liquid crystal panel driving method and apparatus for a dot-inversion system that is adaptive for constantly maintaining a voltage applied to each liquid crystal cell, wherein a "n-1'th (n>=2) cell of adjacent pixel cells is charged and then a nth cell thereof is charged for a shorter time period than the "n-1'th (n>=2) cell. Accordingly, the liquid crystal cells positioned adjacent to each other receive video signals having the same polarity during a different time period. Therefore, the liquid crystal cells positioned adjacent to each other to receive video signals having the same polarity can be coupled with an equal voltage.

US 2006/007094 discloses a liquid crystal display panel having gate drivers. The LCD panel includes a gate line shift circuit setting a gate line scanning order such that the gate lines are sequentially scanned in units of n gate lines with k-1 gate lines between each pair of adjacent gate lines in each unit according to an interleaving method in response to a gate line-on signal received from a timing control unit outside the LCD panel, wherein the LCD panel reproduces source data output from a source driver outside the LCD panel in the gate line scanning order set by the gate line shift circuit. The LCD panel inverts the polarity of a common voltage for every unit of n gate lines, instead of every gate line, thereby reducing power consumption.; In addition, since every kthgate line is scanned according to the interleaving method, deterioration of image quality such as a flickering phenomenon can be prevented, which is an advantage of a line inversion driving method.

JP 11 352938 discloses a solution to the problem of how to reduce the frequency of reverse drive to reduce the power consumption required for the reverse drive in a matrix liquid crystal display device and provide a display of high quality never causing flicker, vertical luminance inclination or obstruction in display of a moving image. To this end the reference discloses a driving method that comprises dividing a scanning line into a plurality of blocks by a scanning order control circuit, performing an interlaced scanning within the blocks and a progressive scanning between the blocks, and supplying a data signal recombined according to the scanning order of scanning signals by a data signal recombination supply circuit to a signal line drive circuit. The signal line is driven so that the polarity of the data signal is reversed between the adjacent scanning lines or adjacent picture elements.

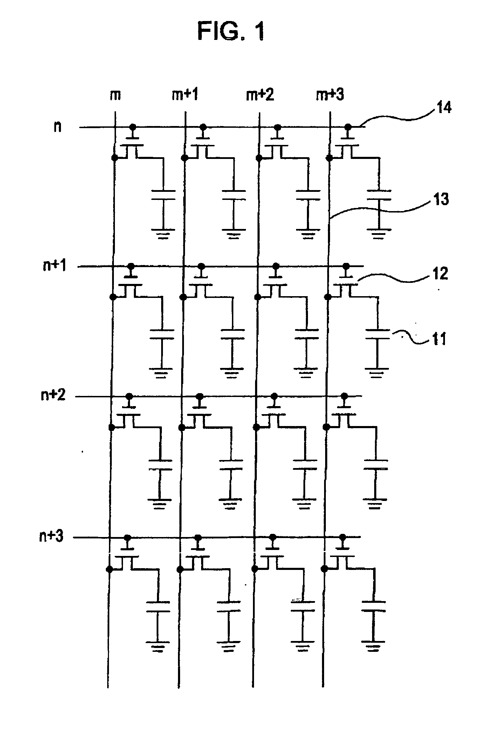

Fig. 1 shows a schematic diagram of an active matrix of a liquid crystal display panel used in, for example, liquid crystal televisions or the like. Here, four rows denoted by n through n+3 and four columns denoted by m through m+3 are shown.

Although the pixel positioned at (n+1, m+3) is used as an example to describe constituent elements that constitute one of pixels, the constituent elements of each of the pixels of the liquid crystal panel are the same as those of the pixel positioned at (n+1, m+3), as a matter of course.

A pixel electrode is provided to each of the pixels that perform display, and a liquid crystal capacitor 11 is formed between the pixel electrode and a common electrode opposite the pixel electrode with liquid crystal therebetween. For each pixel electrode, a TFT 12 that functions as a switch is formed, a gate electrode of the TFT 12 is connected to a gate bus line 14, a source electrode of the TFT 12 is connected to a source bus line 13, and a drain electrode of the TFT 12 is connected to the pixel electrode.

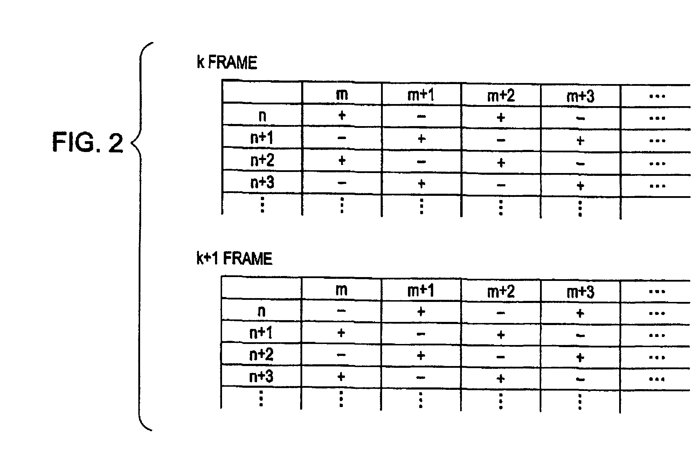

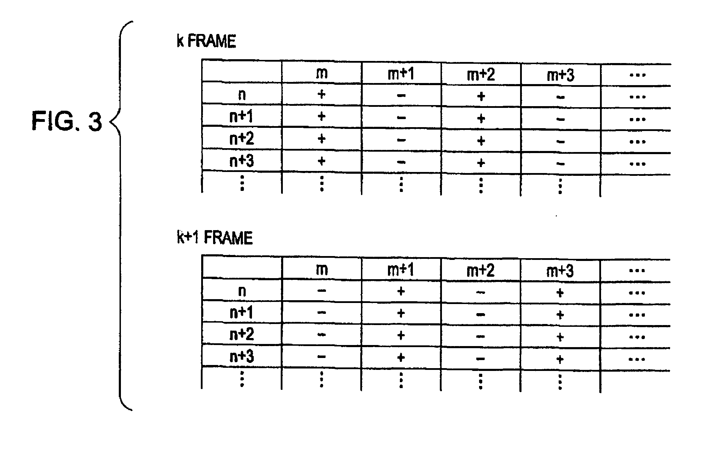

Representative examples of a pattern of the polarity arrangement of pixels in a case where liquid crystal is driven will be described using Figs. 2 and 3.

The pattern of the polarity arrangement shown in Fig. 2 is the most common, and is called dot inversion driving. In the pattern of the polarity arrangement, pixels of positive polarity and pixels of negative polarity are arranged in a checkerboard manner. In dot inversion driving, for example, pixels positioned at the top, the bottom, the right, and the left of a pixel of positive polarity at an arbitrary position have negative polarity. Similarly, pixels positioned at the top, the bottom, the right, and the left of a pixel of negative polarity at an arbitrary position have positive polarity. This pattern has an advantage in that even when the absolute value of the voltage of pixels of positive polarity and the absolute value of the voltage of pixels of negative polarity are not balanced because of inconsistencies in the common voltage, inconsistencies or flicker tends not to occur. However, in dot inversion driving, since the polarity of the output of a source bus line is inverted between positive and negative polarities in units of one line, there is a disadvantage in that the power consumption of a driver integrated circuit (IC) becomes large. In particular, when high-speed writing at 120 Hz or higher is performed in order to realize high-speed responsivity, this disadvantage becomes a severe problem.

Thus, at the time of high-speed driving, as shown in Fig. 3, vertical line inversion driving in which the polarity of pixels arranged in the vertical direction is not inverted within one frame is often performed (for example, see Japanese Unexamined Patent Application Publication No. 63-55590).

When liquid crystal driving is performed, it is ideal that the electric potential whose value is the center point between the positive and negative voltages applied to pixels is applied to the common electrode formed on the counter substrate, liquid crystal being provided between the pixel and common electrodes. When the value of a voltage applied to the common electrode has the central electric potential, the effective voltage applied to the liquid crystal is balanced in terms of positive and negative polarities and brightness does not vary between frames even when display is continuously performed at the same tone. However, it is significantly difficult to make the common voltage be optimal over the entire display unit because of various factors such as use of a transparent electrode ITO whose resistance is relatively high as the common electrode, the resistance of bus lines near TFTs, the parasitic capacitance of TFTs, TFT leakage, variations in liquid crystal capacitance. In this case, the effective voltage applied to a pixel of positive polarity is different from the effective voltage applied to a pixel of negative polarity pixel, and thus there is a problem in that the variations in brightness occur in units of one frame, that is, flicker occurs.

In dot inversion driving described using Fig. 2, positive and negative polarities are finely and evenly arranged in a mixed manner and the variations in brightness cancel each other out, whereby the degree of perception of flicker is greatly reduced. However, when vertical line inversion is employed, flicker occurs in the form of vertical streaks since positive polarities or negative polarities are continuously arranged in each vertical column.

The frequency at which flicker occurs is half the frequency of the driving frequency, and thus in the case of a normal driving frequency of 60 Hz, flicker occurs at a frequency of 30 Hz. Thus, the degree of perception of flicker is very high. In contrast, when the driving frequency becomes high such as 120 Hz or 240 Hz, flicker occurs at a frequency of 60 Hz or 120 Hz, whereby it is not perceived as flicker by the human eye. That is, even when vertical line inversion is employed, if display is performed at high frequencies, general flicker becomes unrecognizable.

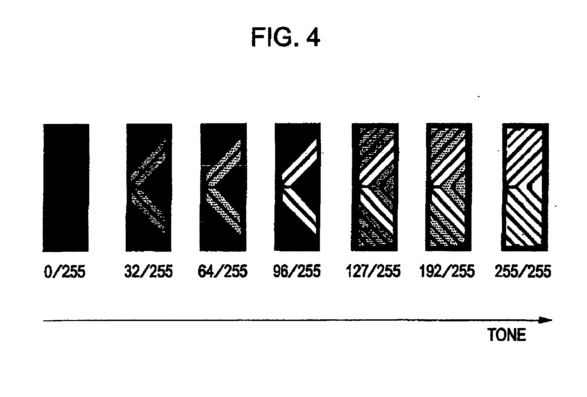

In a VA mode, there is a disadvantage regarding the viewing-angle characteristics in halftones. In order to improve the viewing-angle characteristics in halftones, multi-pixel technology is widely used. Fig. 4 is a drawing illustrating a principle of a multi-pixel structure used for achieving a wide viewing angle in liquid crystal televisions and the like. A pixel is divided into two, for example, a sub-pixel A and a sub-pixel B. Regarding an input tone, the pixel is configured in such a manner that the brightness of the sub-pixel A first increases and then the brightness of the sub-pixel B increases, and thus the entire brightness is adjusted so as to satisfy a gamma characteristic.

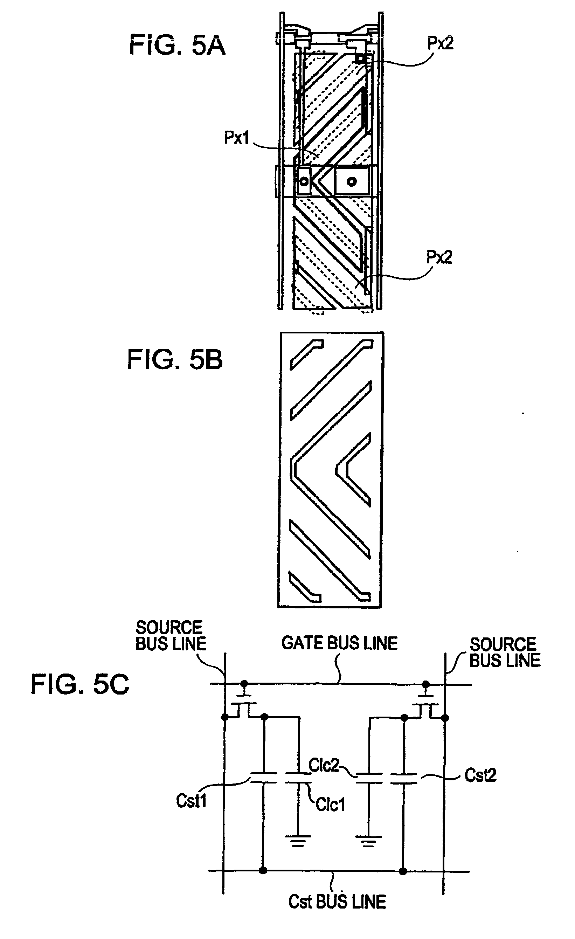

There are a plurality of ways to differentiate the electric potential of the sub-pixel A from the electric potential of the sub-pixel B. For example, a dedicated TFT is provided for each sub-pixel as shown in Fig. 5A and, as shown in an equivalent circuit of Fig. 5C, two source bus lines are provided for the same gate bus line using the pattern of the counter electrode ITO as shown in Fig. 5B. By driving TFTs for the sub-pixels A and B, the electric potential of the sub-pixel A can be differentiated from the electric potential of the sub-pixel B.

More specifically, in Fig. 5A, a pixel electrode for the sub-pixel A is denoted by Px1, and a pixel electrode for the sub-pixel B is denoted by Px2. A TFT for driving the pixel electrode Px1 is denoted by TFT1, and a TFT for driving the pixel electrode Px2 is denoted by TFT2. In the pixel electrodes Px1 and Px2, there are slits for inclining liquid crystal at an angle of 45 degrees, which is unique to the VA mode, and part of the slits are also used as slits for separating the pixel electrode Px1 from the pixel electrode Px2. Similarly, liquid-crystal orientation regulation means is necessary for the common electrode provided on the counter substrate. In Fig. 5A, the slits are indicated by broken lines, and the slits only for the counter electrode are shown in Fig. 5B. Here, an insulator protrusion may be formed on the common electrode as orientation regulation means. As shown in the equivalent circuit of Fig. 5C, the pixel electrodes Px1 and Px2 are electrically independent, and what voltages are to be applied to the pixel electrodes Px1 and Px2 are determined by a control circuit.

### SUMMARY OF THE INVENTION

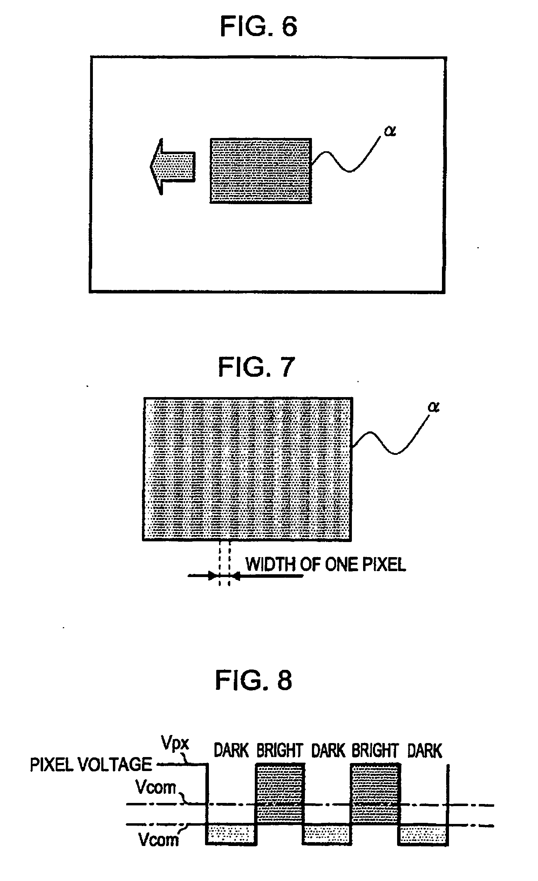

As described above, vertical line inversion has an advantage over dot inversion in terms of power consumption. However, a problem may occur in a moving image regardless of frame frequency. For example, as shown in Fig. 6, when an area having a uniform tone (in this case, a box-shaped area indicated by α in Fig. 6) moves by one dot per frame, inconsistencies in the form of vertical streaks of one-dot pitch clearly appear, as shown in Fig. 7, in this area α. This phenomenon is related to the moving speed of the area α. If the area α is still, the inconsistencies do not appear. If the moving speed is two dots per frame, the inconsistencies do not appear; however, if the moving speed is three dots per frame, the inconsistencies appear again.

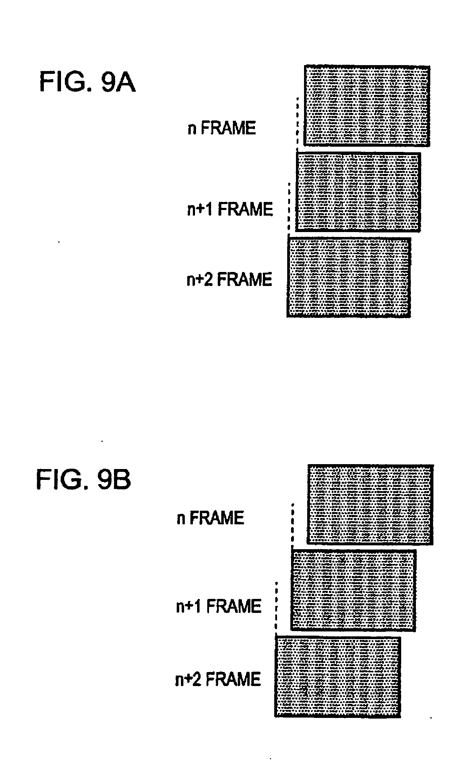

A cause of this phenomenon will be described using Figs. 8 and 9. First, when the common voltage of the common electrode is shifted to Vcom' from the central electric potential Vcom which is the center point between the positive and negative voltages, a difference occurs in brightness between the positive and negative polarities, as shown in Fig. 8. As described above, if the driving frequency is high to a certain level (for example, in the case of driving at 120 Hz, flicker occurs at a frequency of 60 Hz), when the area α is still, this difference in brightness is not perceived by the human eye.

However, it has been proved that when this area α moves by one dot per frame as shown in Fig. 9A, the line of sight of a person moves by one dot per frame in synchronization with the movement of the area α. As a result, the positions of bright and dark columns are fixed with respect to the outline of the area α whose shape is a box and on which a person focuses, whereby inconsistencies in the form of vertical streaks appear because of a difference in brightness between the positive and negative polarities. In contrast, as shown in Fig. 9B, when the area α moves by two dots per frame, the positions of bright and dark columns change with respect to the outline of the area α, inconsistencies in the form of vertical streaks do not appear.

In this way, vertical line inversion has an advantage over dot inversion in terms of power consumption; however, it is necessary to solve the problem of the occurrence of inconsistencies in the form of vertical streaks described using Figs. 6 through 9B.

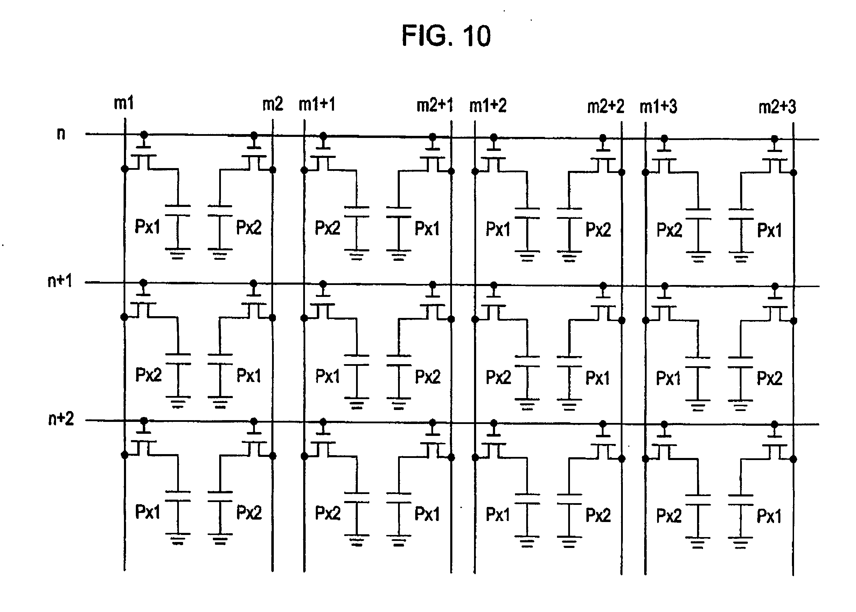

Regarding the above-described multi-pixel structure, similarly to the case described using Fig. 1, there is an arrangement in which only pixel electrodes Px1 are connected to a source bus line and only pixel electrodes Px2 are connected to the next source line; however, it is necessary to employ the arrangement of pixels shown in Fig. 10 in order to solve the problem of the occurrence of inconsistencies in the form of vertical streaks described using Figs. 6 through 9B.

In Fig. 10, the pixel electrodes Px1 and Px2 each have a dedicated TFT. The pixel electrodes Px1 and Px2 are connected to right and left source bus lines in a checkerboard manner. Thus, for each source bus line, the pixel electrodes Px1 and Px2 are alternately connected such as Px1, Px2, Px1, Px2, and so on.

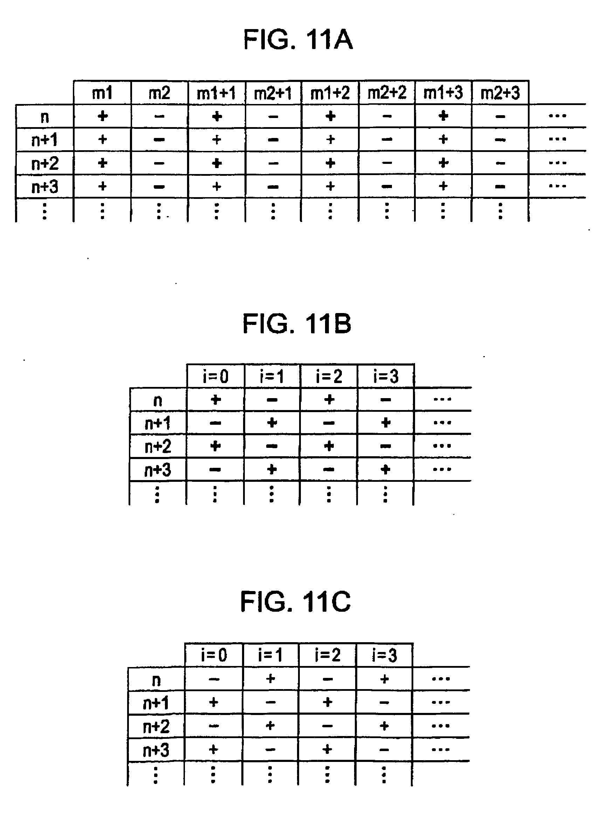

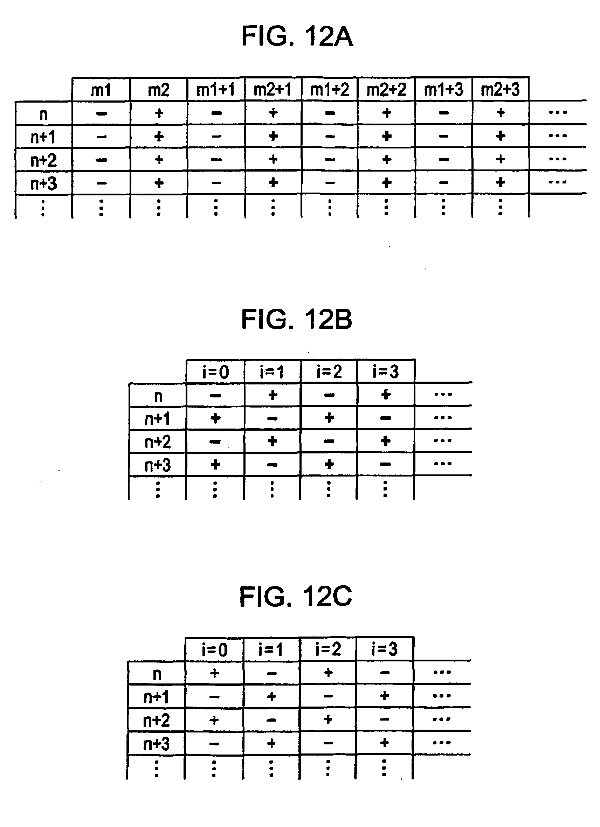

Figs. 11A through 12C show patterns of writing polarity in Fig. 10. Fig. 11A shows a pattern of the polarity arrangement of all the polarities detected through each of the bus lines in the k-th frame. Fig. 11B shows a pattern of the polarity arrangement regarding only the pixel electrodes Px1 in the k-th frame. Fig. 11C shows a pattern of the polarity arrangement regarding only the pixel electrodes Px2 in the k-th frame. Fig. 12A shows a pattern of the polarity arrangement of all the polarities detected through each of the bus lines in the k+1-th frame. Fig. 12B shows a pattern of the polarity arrangement regarding only the pixel electrodes Px1 in the k+1-th frame. Fig. 12C shows a pattern of the polarity arrangement regarding only the pixel electrodes Px2 in the k+1-th frame. Here, bold pluses (+) and bold minuses (-) indicate the pixel electrodes Px1 and regular pluses (+) and regular minuses (-) indicate the pixel electrodes Px2.

As shown in Figs. 11A and 12A, the output of source bus lines indicates vertical line inversion, and it is advantageous in terms of power consumption. As shown in Figs. 11B and 11C and Figs. 12B and 12C, the polarities of the pixels for the pixel electrodes Px1 are arranged in a checkerboard manner and the polarities of the pixels for the pixel electrodes Px2 are arranged in a checkerboard manner. Thus, even when the electric potential of the common electrode becomes shifted from the central electric potential Vcom, which is optimal, and a difference in brightness occurs, the difference in brightness is canceled out between pixels positioned within a short distance, whereby perceptible inconsistencies do not occur.

However, there is a new problem regarding the structure described using Figs. 10 through 12C. More specifically, in the operation of writing described using Figs. 11A through 12C, the polarity of the outputs of specific source bus lines is not inverted and consumption power is suppressed. For example, when the entire screen is white, that is, in the case of a tone of 255/255, the maximum voltage is applied to all pixels including the pixel electrodes Px1 and Px2; however, since there is no change in voltage and the maximum voltage is supplied to the bus lines on every occasion, it is almost not necessary for a driver IC to feed a current and power consumption is significantly small. However, when a halftone is displayed, it is necessary to differentiate the sub-pixel A from the sub-pixel B in terms of brightness in each pixel having a multi-pixel structure. Thus, for example, in the case of a tone of about 64/255, a tone difference is caused such as a tone of 240/255 for the pixel electrodes Px1 and a tone of 0/255 for the pixel electrodes Px2. An actual source driver operates with a large difference in electric potential such as 240/255, 0/255, 240/255, 0/255, and so on, whereby a power-consumption suppression effect decreases and the power consumption becomes almost the same as that in dot inversion driving.

In an image that is actually displayed (for example, an image received and displayed by a television tuner), a video whose images are all white is quite rare, and a video usually contains many halftones. Thus, the structure described using Figs. 10 through 12C greatly decreases an advantage obtained as a result of employment of vertical line inversion in terms of the entire power consumption.

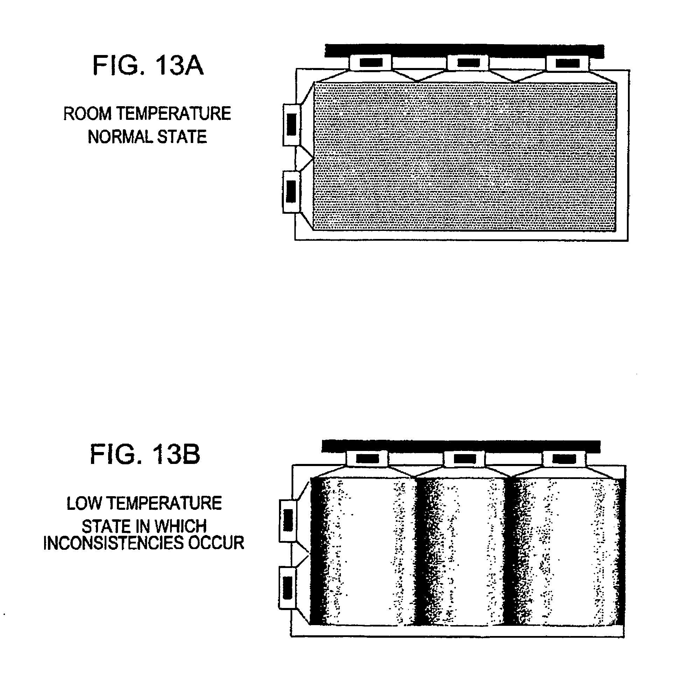

Moreover, with the structure described using Figs. 10 through 12C, uniform display is performed as shown in Fig. 13A at room temperature; however, when the temperature is low, the inconsistencies in the form of streaks occur which correspond to the pitch with which drivers are implemented, as shown in Fig. 13B.

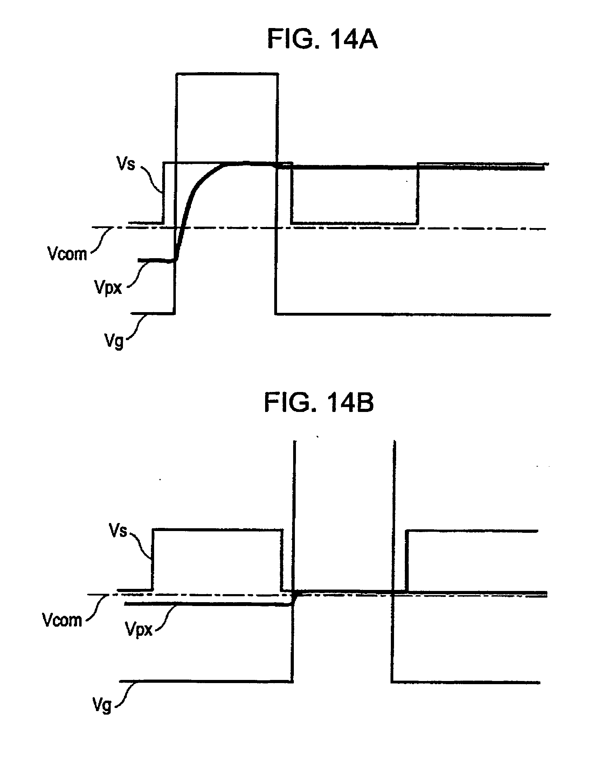

Using Figs. 14A though 16B, a cause of the streaks in the forms of streaks will be described. Figs. 14A and 14B show a voltage Vg of a gate bus line, a voltage Vs of a source bus line, and a voltage Vpx of a pixel electrode in a halftone (for example, a tone of 127/255) when an ideal waveform is input. Fig. 14A shows the operation of writing to a pixel electrode Px1, and Fig. 14B shows the operation of writing to a pixel electrode Px2. The voltage Vs of a source bus line changes by a large difference in electric potential in such a manner that the level of halftone changes such as 240/255, 0/255, 240/255, 0/255, and so on. In a state in which the write gate pulse is high, electric current flows between a pixel electrode and a corresponding source bus line via a TFT, and the voltage Vpx of the pixel electrode changes.

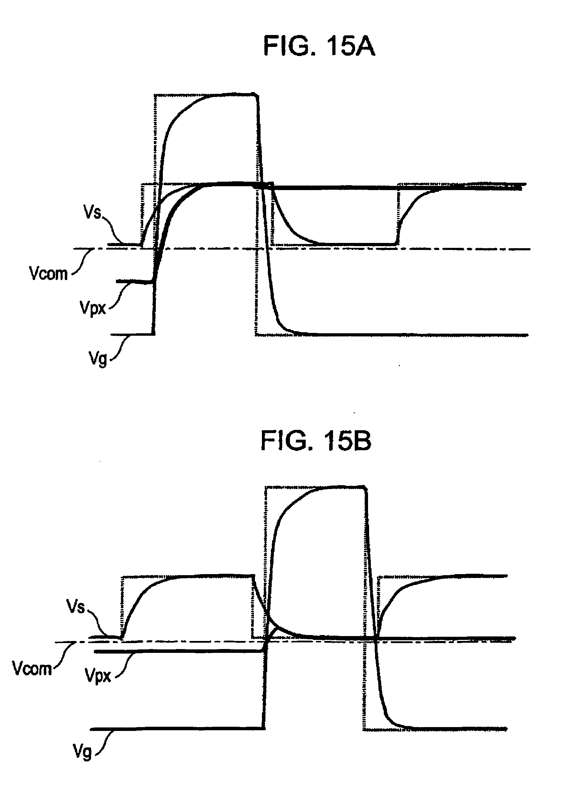

Figs. 15A and 15B show the voltage Vg of a gate bus line, the voltage Vs of a source bus line, and the voltage Vpx of a pixel electrode in a halftone (for example, a tone of 127/255) when a delay time in a bus line is assumed. Fig. 15A shows the operation of writing to a pixel electrode Px1, and Fig. 15B shows the operation of writing to a pixel electrode Px2. When driving is performed at room temperature, the operation of writing is performed in a state that is almost similar to the state as shown in Figs. 15A and 15B. In such a case, the gate pulse and the source voltage are attenuated at a portion where the gate pulse rises, and thus more time is necessary to charge a pixel electrode than in a state described using Figs. 14A and 14B. However, normally, TFTs are designed to be able to perform the operation of writing even in such a state, and thus no problem occurs.

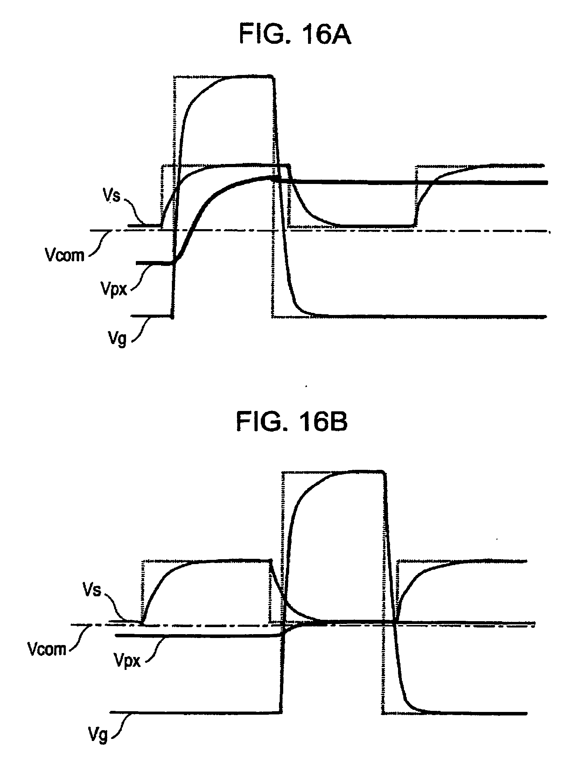

However, if the temperature further lowers, the mobility of TFTs decreases, whereby more time is necessary for charging. Figs. 16A and 16B show the voltage Vg of a gate bus line, the voltage Vs of a source bus line, and the voltage Vpx of a pixel electrode in a halftone (for example, a tone of 127/255) when a delay time in a bus line is assumed and the performance of TFTs becomes low at low temperatures. Fig. 16A shows the operation of writing performed to a pixel electrode Px1, and Fig. 16B shows the operation of writing performed to a pixel electrode Px2. In the case shown in Figs. 16A and 16B, the delayed voltage of a source bus line affects the operation of writing, whereby inconsistencies in the form of streaks as described using Fig. 13B occur.

As a matter of course, it is possible to decrease the inconsistencies in the form of streaks as shown in Fig. 13B by designing a TFT in such a manner that it mainly supports low temperatures. However, if the size of the TFT becomes large for the design, the risk of occurrence of different problems may arise. For example, the aperture ratio lowers, or the inconsistencies become worse because of an increased delay time which is caused by the increase in gate load. The higher the writing speed, for example, 120 Hz or 240 Hz, the greater the effect of such problems. Thus, conditions become worse.

The present invention has been made in light of such circumstances, and it is desirable to suppress the occurrence of inconsistencies in the form of streaks and to decrease a necessary capacity of a memory without the size of a TFT being increased.

A liquid crystal display device according to the present invention is defined by the device claim 1 and the method claim 2.

A network is a system in which at least two devices are connected to each other and communication can be performed from one device to another device. Devices that can communicate via a network may be individual devices or internal blocks included in one device.

Moreover, as a matter of course, communication includes radio communication and wire communication, and may also include communication in which radio communication and wire communication are mixed, that is, communication in which radio communication is performed in a section and wire communication is performed in another section. Furthermore, communication in which wire communication is performed from one device to another device from which radio communication is performed to another device may be performed.

A display device may be an individual device, or a block that performs display processing in a television receiver or a recording/playback device. Moreover, a display control device may be an individual device or a block that performs display control processing in a television receiver or a recording/playback device.

### BRIEF DESCRIPTION OF THE DRAWINGS

Fig. 1 is a diagram for describing an active matrix of a liquid crystal display panel;
Fig. 2 is a diagram for describing patterns of the polarity arrangement of pixels in a case where liquid crystal is driven;
Fig. 3 is a diagram for describing patterns of the polarity arrangement of pixels in a case where liquid crystal is driven;
Fig. 4 is a diagram for describing a multi-pixel structure used for achieving a wide viewing angle;
Figs. 5A through 5C are diagrams for describing a multi-pixel structure used for achieving a wide viewing angle;
Fig. 6 is a diagram for describing the occurrence of inconsistencies in the form of vertical streaks when vertical line inversion is performed;
Fig. 7 is a diagram for describing the occurrence of inconsistencies in the form of vertical streaks when vertical line inversion is performed;
Fig. 8 is a diagram for describing the occurrence of inconsistencies in the form of vertical streaks when vertical line inversion is performed;
Figs. 9A and 9B are diagrams for describing the occurrence of inconsistencies in the form of vertical streaks when vertical line inversion is performed;
Fig. 10 is a diagram for describing the arrangement of pixels for solving a problem of the occurrence of inconsistencies in the form of vertical streaks;
Figs. 11A through 11C are diagrams for describing patterns of writing polarity in Fig. 10;
Figs. 12A through 12C are diagrams for describing patterns of writing polarity in Fig. 10;
Figs. 13A and 13B are diagrams for describing the occurrence of inconsistencies in the form of streaks at low temperatures;
Figs. 14A and 14B are diagrams for describing the occurrence of inconsistencies in the form of streaks at low temperatures;
Figs. 15A and 15B are diagrams for describing the occurrence of inconsistencies in the form of streaks at low temperatures;
Figs. 16A and 16B are diagrams for describing the occurrence of inconsistencies in the form of streaks at low temperatures;
Fig. 17 is a block diagram showing the structure of a display device;
Fig. 18 is a diagram for describing a first driving example executed in the display device;
Figs. 19A through 19D are diagrams for describing a second driving example executed in the display device;
Figs. 20A through 20D are diagrams for describing the second driving example executed in the display device;
Figs. 21A and 21B are diagrams for describing voltages applied to a TFT in the second driving example;
Fig. 22 is a diagram for describing sub-frames;
Figs. 23A and 23B are diagrams for describing selected lines and inversion of a polarity signal in the case of Fig. 22;
Fig. 24 is a diagram for describing driving signals in the case of Fig. 22;
Fig. 25 is a diagram for describing sub-frames when a frame is divided;
Figs. 26A through 26C are diagrams for describing selected lines and inversion of a polarity signal in the case of Fig. 25;
Fig. 27 is a diagram for describing driving signals in the case of Fig. 25;
Fig. 28 is a diagram for describing driving waveforms in the case of Fig. 25;
Fig. 29 is a diagram for describing sub-frames in a case where frame division for odd lines is different from frame division for even lines; and
Figs. 30A through 30C are diagrams for describing selected lines and inversion of a polarity signal in the case of Fig. 29.

### DESCRIPTION OF THE PREFERRED EMBODIMENTS

In the following, embodiments of the present invention will be described with reference to the drawings.

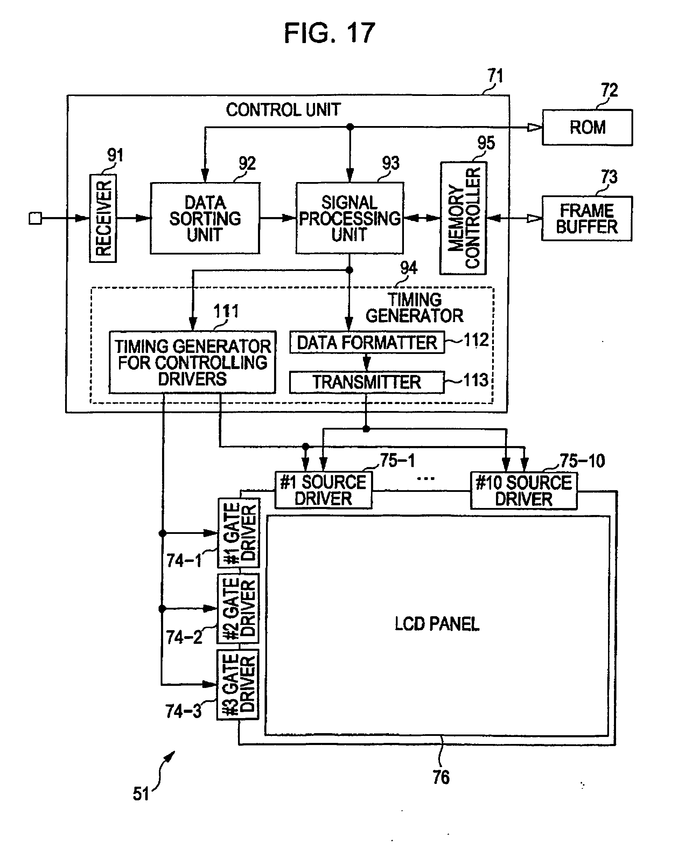

Fig. 17 is a block diagram showing the structure of a display device 51. The display device 51 includes a control unit 71, a read-only memory (ROM) 72, a frame buffer 73, a gate driver 74, a source driver 75, and a liquid crystal display (LCD) panel 76.

The control unit 71 is a unit for controlling the display device 51, and includes a receiver 91, a data sorting unit 92, a signal processing unit 93, a timing generator 94, and a memory controller 95. The control unit 71 performs signal processing (for example, color control and the like) unique to the display device 51 and also controls the gate driver 74 and the source driver 75 for driving scanning (gate) lines and data (source) lines of the LCD panel 76 in order to write image data to pixels for display.

The receiver 91 receives a video signal input from the outside, and supplies the video signal to the data sorting unit 92.

The data sorting unit 92 executes sorting of the data of an input image, and supplies the sorted input image to the signal processing unit 93.

The signal processing unit 93 refers to a parameter stored in the ROM 72, and executes gamma correction or signal processing for compensating the response of the liquid crystal and the voltage with which the operation of writing is performed to a pixel. The signal processing unit 93 supplies the processed signal to the timing generator 94 or the memory controller 95.

The timing generator 94 includes a timing generator 111 for controlling drivers, a data formatter 112, and a transmitter 113, and is a unit for performing the most basic control regarding display of the display device 51.

The timing generator 111 for controlling drivers generates a control signal for controlling the gate driver 74 for driving display elements and the source driver 75 for writing image data to pixels in accordance with the signal supplied from the signal processing unit 93, the gate driver 74 being for scanning.

The data formatter 112 converts the signal supplied from the signal processing unit 93 into a video signal whose signal format can be supplied to the source driver 75. The transmitter 113 sends the video signal converted by the data formatter 112 to the source driver 75.

The memory controller 95 controls input/output of a processed image signal to/from the frame buffer 73.

The ROM 72 stores a parameter which is necessary for the internal operation of the control unit 71 such as processing to be performed by the signal processing unit 93.

The frame buffer 73 stores image data in accordance with control performed by the memory controller 95.

A plurality of gate drivers 74 (here, three gate drivers 74-1 through 74-3) may be provided. The gate drivers 74 drive scanning (gate) lines that correspond to pixels arranged in matrix on the LCD panel 76, in accordance with control performed by the timing generator 111 for controlling drivers, and perform on/off control of active elements connected to gate bus lines.

A plurality of source drivers 75 (here, ten drivers 75-1 through 75-10) may be provided. The source drivers 75 convert, from digital to analog, the video signal supplied from the transmitter 113 into data to be written to pixels and drive corresponding source bus lines, in accordance with control performed by the timing generator 111 for controlling drivers, in such a manner that the video signal is displayed on display elements arranged in matrix on the LCD panel 76.

The LCD panel 76 includes liquid crystal display elements corresponding to the pixels arranged in matrix, and displays an image in accordance with the holding potential of the liquid crystal display elements.

The operation of the display device 51 will be described.

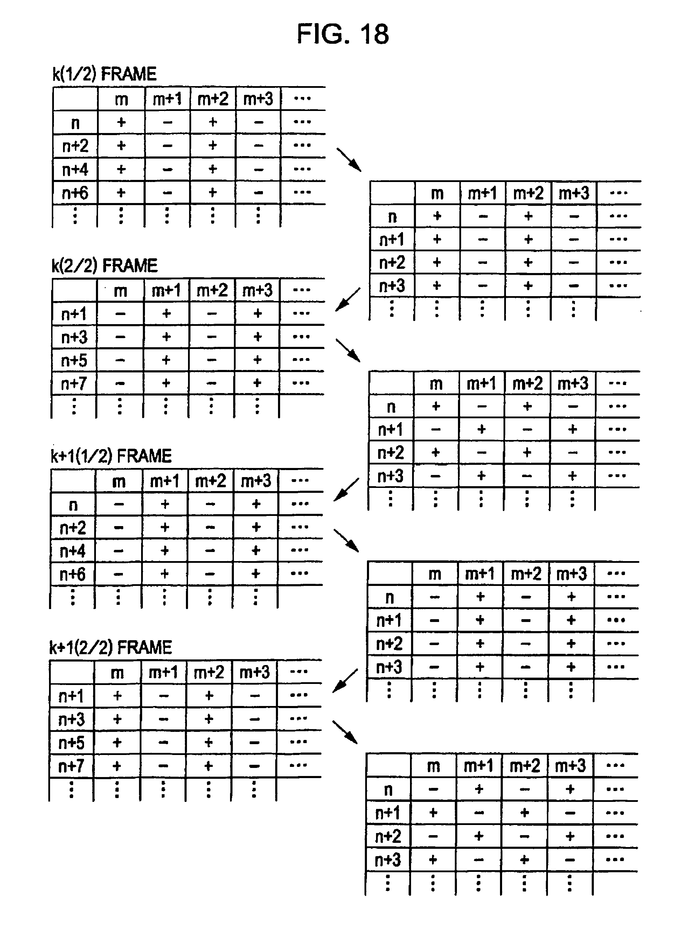

First, the receiver 91 of the control unit 71 receives a video signal, and supplies the video signal to the data sorting unit 92. The data sorting unit 92 sorts the data of the video signal and supplies the sorted video signal to the signal processing unit 93 in accordance with the setting recorded in the ROM 72, in such a manner that display can be performed, for example, as described in the following description using Figs. 18 through 30.

Then, the signal processing unit 93 performs one-to-one correction regarding RGB γ using a parameter recorded in the ROM 72, and supplies the resulting signal to the frame buffer 73 via the memory controller 95. The signal processing unit 93 reads an image signal which is delayed by one frame from the frame buffer 73 via the memory controller 95 and executes signal processing for compensating the response of the liquid crystal of the LCD panel 76 and the voltage with which the operation of writing is performed to a pixel, by performing comparison operation between the read image signal and an image signal of the next frame. The signal processing unit 93 supplies the processed signal to the timing generator 94.

The timing generator 111 for controlling drivers and data formatter 112 of the timing generator 94 receive the processed signal from the signal processing unit 93. The timing generator 111 for controlling drivers generates a control signal for controlling the gate drivers 74 and the source drivers 75 for driving display elements of the LCD panel 76, and outputs the control signal to the gate drivers 74 and the source drivers 75.

Then, the data formatter 112 converts the signal supplied from the signal processing unit 93 into a video signal whose signal format can be supplied to the source drivers, and supplies the video signal to the transmitter 113. The transmitter 113 sends the video signal converted by the data formatter 112 to the source drivers.

The source drivers 75 convert, from digital to analog, the video signal supplied from the transmitter 113 into data to be written to pixels and drive corresponding source bus lines to display the video signal on display elements arranged in matrix on the LCD panel 76 in accordance with control performed by the timing generator 111 for controlling drivers, whereby the LCD panel 76 displays an image. Here, the timing generator 111 for controlling drivers controls the timing at which a polarity signal POL is inverted, the polarity signal POL being used to determine the output characteristics of the source drivers 75. The inversion of the polarity signal POL and the writing polarities for pixels will be specifically described below.

A first driving example executed in the display device 51 will be described with reference to Fig. 18.

One frame is divided into two sub-frames 1/2 and 2/2. The polarity of the source bus lines is not inverted in each of the sub-frames. The polarity of the source bus lines is inverted between the sub-frames. Furthermore, the gates of every other line are selected in units of one sub-frame. That is, one frame is divided into an odd sub-frame in which only odd lines are selected and an even sub-frame in which only even lines are selected.

In this case, the number of times the polarity inversion is performed increases to two times/frame, compared with existing vertical line inversion driving whose number of times the polarity inversion is performed is one time/frame. However, the number of times the polarity inversion is performed in this case is much less than that of dot-inversion driving (that is, the number of times the polarity inversion is performed is determined by the number of lines, and thus, for example, the number of times the polarity inversion is performed is 1080 in the case of full high-definition TV). Thus, the power consumption merely slightly increases.

The right side of Fig. 18 shows the polarity arrangement in units of one frame. In contrast to existing vertical line inversion driving in which positive polarities or negative polarities are continuously arranged in each vertical column on every occasion, if this proposed scheme is used, the polarity arrangement is equivalent to that of dot inversion driving at least during half a period of one frame, whereby a problem of flicker or inconsistencies in the form of vertical streaks in a moving image can be greatly reduced.

Next, as a second driving example executed in the display device 51, a case in which the LCD panel 76 having a multi-pixel structure is driven will be described.

In the display device 51, for example, the LCD panel 76 having a multi-pixel structure described using Figs. 4, 5, and 10 can also be driven. That is, each of the pixels can be divided into a plurality of pixels (here, two pixels of a sub-pixel A and a sub-pixel B). Regarding an input tone, the pixel is configured in such a manner that the brightness of the sub-pixel A first increases and then the brightness of the sub-pixel B increases, and thus the entire brightness is adjusted so as to satisfy a gamma characteristic. There are a plurality of ways to differentiate the electric potential of the sub-pixel A from the electric potential of the sub-pixel B. For example, as described using Fig. 5A, a dedicated TFT is provided for each sub-pixel and, as shown in the equivalent circuit as described using Fig. 5C, two source bus lines are provided for the same gate bus line using the pattern of a counter electrode ITO as described using Fig. 5B and the TFTs for the sub-pixels A and B can individually be driven.

Then, the pixel arrangement of the LCD panel 76 is the same as that described using Fig. 10. That is, the pixel electrode for the sub-pixel A is denoted by Px1, and the pixel electrode for the sub-pixel B is denoted by Px2. The TFT for driving the pixel electrode Px1 is denoted by TFT1, and the TFT for driving the pixel electrode Px2 is denoted by TFT2. The pixel electrodes Px1 and Px2 each have a dedicated TFT. The pixel electrodes Px1 and Px2 are connected to right and left source bus lines in a checkerboard manner. Thus, for each source bus line, the pixel electrodes Px1 and Px2 are alternately connected such as Px1, Px2, Px1, Px2, and so on.

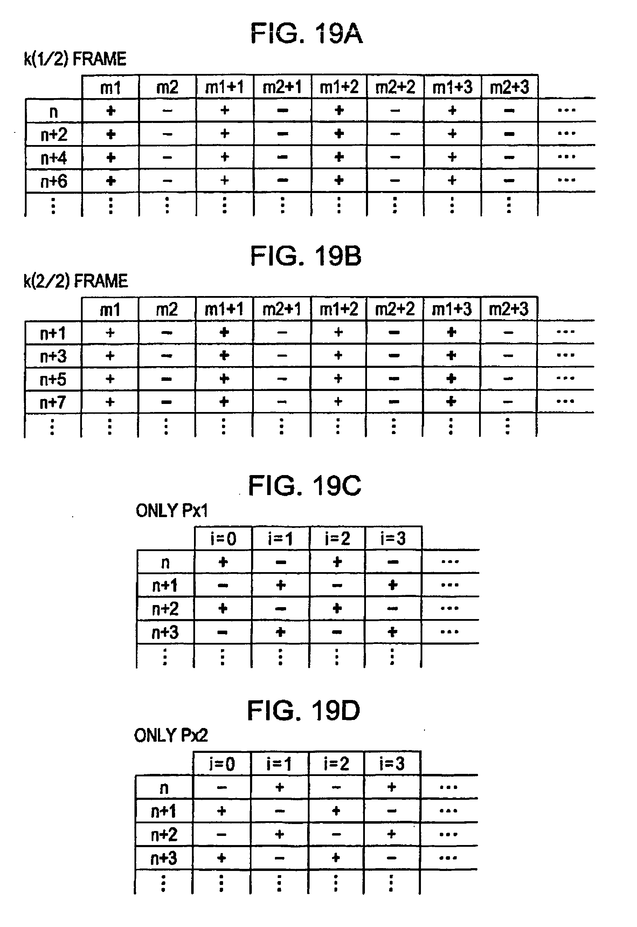

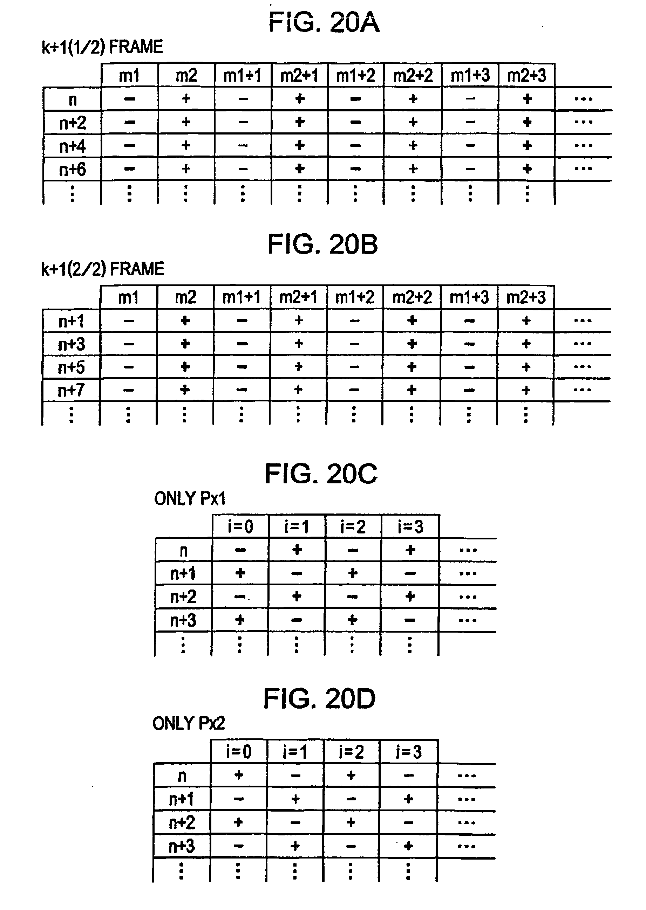

Even in a case of driving such pixels having a multi-pixel structure, in the display device 51, one frame is divided into sub-frames 1/2 and 2/2. The polarity of the source bus lines is not inverted in each of the sub-frames and the polarity of the source bus lines is inverted between the sub-frames. Moreover, the gates of every other line are selected in units of one sub-frame. That is, even in this case, one frame is divided into an odd sub-frame in which only odd lines are selected and an even sub-frame in which only even lines are selected. In this case, the polarity arrangement in the k-th frame is shown in Fig. 19 and the polarity arrangement in the k+1-th frame is shown in Fig. 20.

Here, bold pluses (+) and bold minuses (-) indicate the pixel electrodes Px1 and regular pluses (+) and regular minuses (-) indicate the pixel electrodes Px2. More specifically, in the k(1/2)-th frame shown in Fig. 19A, vertical lines of m1, m2+1, m1+2, and m2+3 correspond to the pixel electrodes Px1 and others correspond to the pixel electrodes Px2. In the k(2/2)-th frame shown in Fig. 19B, inversion occurs from the k(1/2)-th frame, and vertical lines of m2, m1+1, m2+2, and m1+3 correspond to the pixel electrodes Px1 and others correspond to the pixel electrodes Px2.

That is, in the polarity arrangement shown in Figs. 19A through 20D, the polarity is different between m1 and m2 and between m1+β and m2+**β** (**β** is an integer greater than or equal to 1). The polarity is the same between m1 and m1+1, between m2 and m2+1, between m1+**β** and m1+(**β**+1), and between m2+**β** and m2+(**β**+1) (**β** is an integer greater than or equal to 1) .

In such a case, even when only odd lines are driven or only even lines are driven, each source bus line only drives either the pixel electrode Px1 or the pixel electrode Px2. Then, as shown in Figs. 19C and 19D and Figs. 20C and 20D, the pixel electrodes Px1 have a polarity arrangement equivalent to that of dot inversion driving and the pixel electrodes Px2 also have a polarity arrangement equivalent to that of dot inversion driving. That is, in the display device 51, when such driving is performed, a problem of flicker and inconsistencies in the form of vertical streaks in a moving image can be greatly reduced by the polarity arrangement obtained in a state in which driving of two sub-frames is finished.

When a halftone is displayed using pixels having a multi-pixel structure, in the related art, the voltage of source bus lines greatly changes, whereby the power consumption becomes large; however, as described using Figs. 19A through 20D, in the display device 51, the operation of writing is performed using a group of pixel electrodes Px1 or a group of pixel electrodes Px2 in units of a sub-frame. Thus, the change in voltage can be suppressed, whereby the power consumption can be prevented from becoming large. For example, in the case of uniform tone display over the entire display, no matter which tone is displayed, electric current flows the source bus lines for a moment when switching is performed between sub-frames and this happens only two times in one frame in such a case. In this way, in the display device 51, even when a halftone is displayed using pixels having a multi-pixel structure, the effects of vertical frame inversion can be utilized to the utmost.

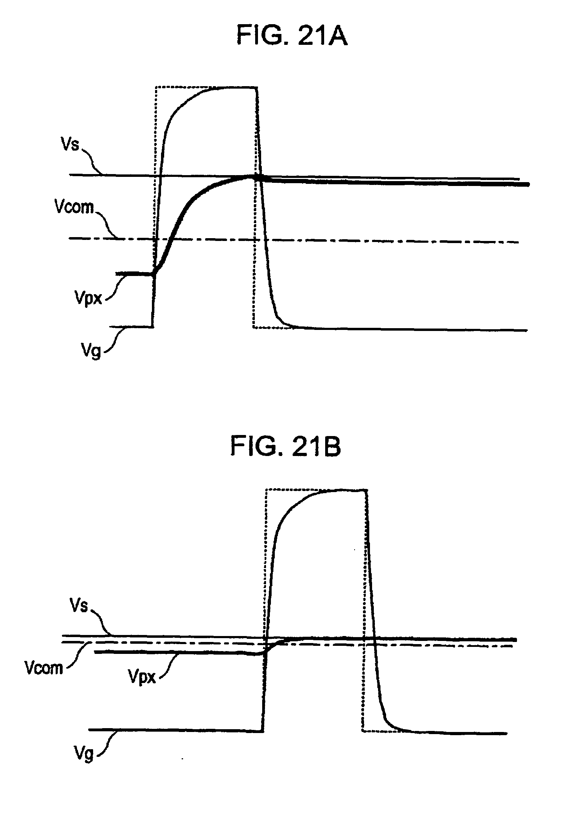

Next, Fig. 21 shows voltages applied to a TFT in the display device 51. In Fig. 21, the central electric potential Vcom of the common voltage, the voltage Vg of a gate bus line, the voltage Vs of a source bus line, and the voltage Vpx of a pixel electrode.

As shown in Fig. 21, the change in the voltage Vs of a source bus line is small, even when the performance of the TFT lowers, the operation of writing data within a period is easily performed. Thus, as its effect, a safety margin of TFT performance can be obtained. As a result, the inconsistencies occurring at low temperatures can be decreased without increasing the burden due to the increase in the size of the TFT.

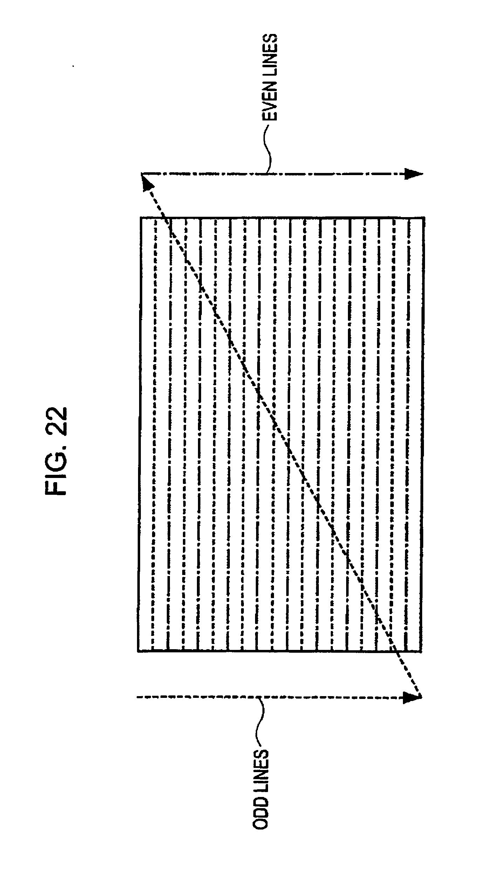

As described above, two sub-frames 1/2 and 2/2 are designed to drive only odd lines and only even lines, respectively. That is, in the display device 51, even in the case of pixels having a multi-pixel structure or even in the case of pixels having a general structure, for example, as shown in Fig. 22, driving is performed in such a manner that only the odd lines are first selected from the top of the screen and driven, and then only the even lines are selected from the top of the screen and driven.

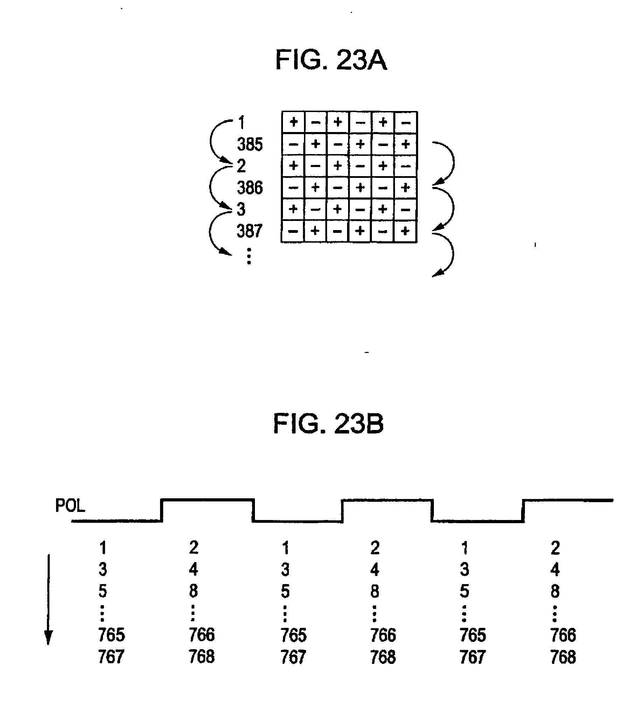

Here, as shown in Fig. 23A, after the first line is driven, the third line is driven and then the fifth line is driven. After all the odd lines are driven, the second line, the fourth line, and so on are driven (the numbers in Fig. 23A indicate the driving order of the lines). Thus, as shown in Fig. 23B, the polarity signal POL changes once every time switching is performed between sub-frames (the numbers in Fig. 23B indicate the line number counted from the top of the screen).

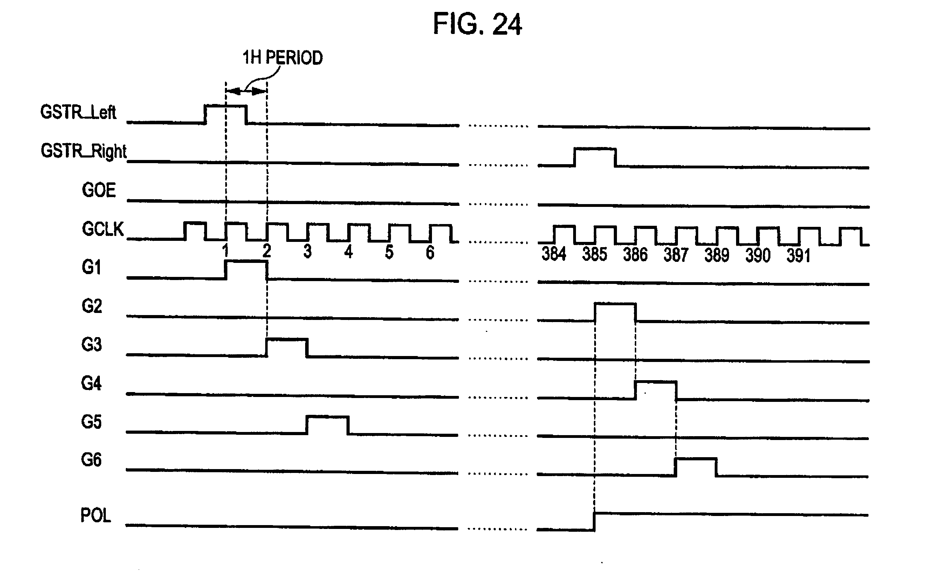

Fig. 24 shows driving signals for operating the LCD panel 76 in the case described using Figs. 22 through 23B. In Fig. 24, GSTR_Left denotes a signal indicating the start of scanning odd lines, GSTR_Right denotes a signal indicating the start of scanning even lines, CGLK denotes a reference clock signal for horizontal synchronization, G1, G2, and so on each denote a gate-driving waveform of a corresponding line, and POL denotes a signal for controlling the driving polarity for source drivers.

In this way, in the case described using Figs. 22 through 23B, driving is performed in such a manner that after only the odd lines are selected from the top of the screen, only the even lines are selected from the top of the screen.

In contrast, one screen may be divided into a plurality of frames, and each of the frames may further be divided into two sub-frames 1/2 and 2/2 as described above.

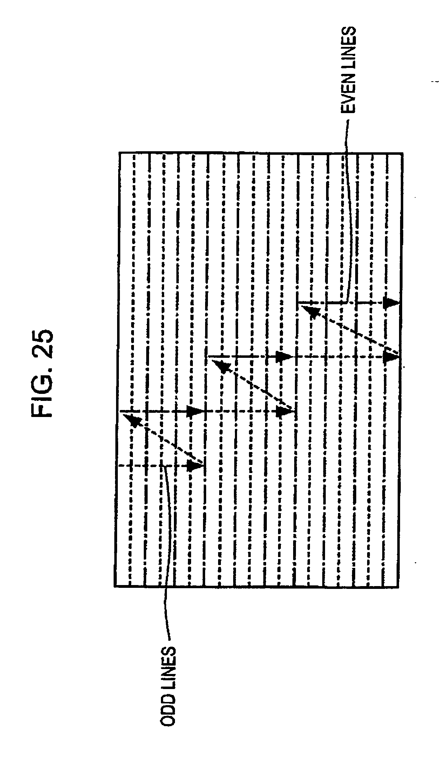

That is, as described using Figs. 22 through 24, in order to divide one frame into two sub-frames 1/2 and 2/2 for driving only the odd lines and only the even lines, a frame memory of at least the capacity of storing one screen is necessary for storing an input signal. Thus, in the display device 51, as shown in Fig. 25, even in the case of pixels having a multi-pixel structure or even in the case of pixels having a general structure, one screen is divided into some areas, and odd and even sub-frames are switched therebetween several times within one frame. As the number of areas into which one screen is divided increases, a necessary capacity of a memory becomes smaller; however, the number of times the polarity inversion is performed increases and thus the power consumption increases. If the inversion is performed every line, it is the same as dot inversion driving and the power consumption is high; however, for example, if the inversion is performed every two lines, a power-consumption reducing effect can be obtained, compared with dot inversion driving.

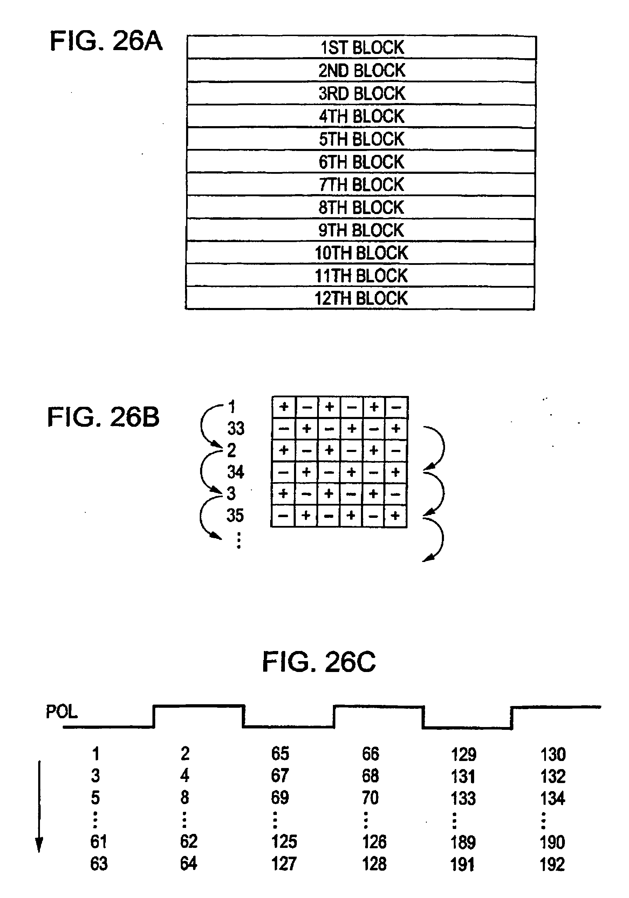

For example, as shown in Fig. 26A, when one screen is divided into twelve areas along the horizontal direction, as shown in Fig. 26B, after the first line is driven, the third line is driven and then the fifth line is driven. After 32 odd lines to the 63rd line are driven, the second line, the fourth line, and so on are driven (the numbers in Fig. 26B indicate the driving order of the lines). Thus, as shown in Fig. 26C, the polarity signal POL changes 24 times within one frame, that is, the polarity signal POL changes once every time switching is performed between sub-frames in the frame that is divided into twelve areas (the numbers in Fig. 26C indicate the line number counted from the top of the screen).

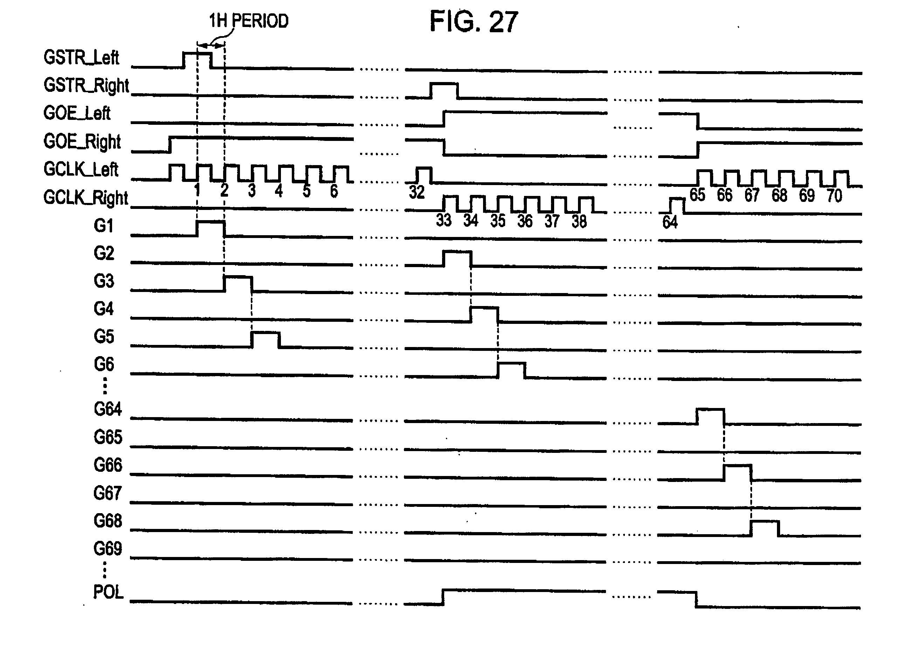

Fig. 27 shows driving signals for operating the LCD panel 76 in the case described using Figs. 26A through 26C. In Fig. 27, GSTR_Left denotes a signal indicating the start of scanning odd lines, GSTR_Right denotes a signal indicating the start of scanning even lines, CGLK_Left denotes a reference clock signal for horizontal synchronization for odd lines, and CGLK_Right denotes a reference clock signal for horizontal synchronization for even lines. Here, as a matter of course, a reference clock signal may be a single signal as in the case described using Fig. 24. Moreover, G1, G2, and so on each denote a gate-driving waveform of a corresponding line, and POL denotes a signal for controlling the driving polarity for source drivers.

In this way, in the case described using Figs. 26A through 27, switching is performed between the sub-frames in the frame that is divided into twelve areas, and odd lines or even lines are driven in each sub-frame, whereby the power consumption can be suppressed and a necessary capacity of a memory can be smaller, compared with dot inversion driving.

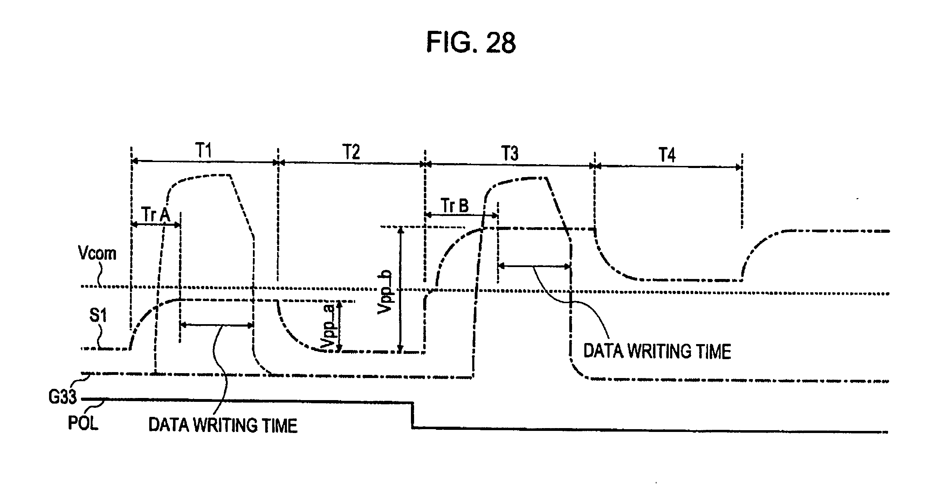

Fig. 28 shows driving waveforms that operate each pixel of the LCD panel 76 in the driving method described using Figs. 26A through 27.

In Fig. 28, VCOM denotes the electric potential of the counter electrode regarding the electric potential of each of the pixels of the LCD panel 76. The display potential is determined by the capacitance determined by the counter electrode and the pixel. Then, S1 denotes a driving waveform of a source bus line, and G33 denotes a driving waveform of the 33rd scanning (gate) line, and POL denotes a signal for controlling the driving polarity for the source drivers 75.

While the first through 31st odd lines are being driven, that is, while the polarity signal POL is fixed, the source drivers 75 do not cause any change that crosses the electric potential VCOM and thus a rising time can be short. However, next, when the 33rd gate line is driven, that is, when odd-line driving is switched to even-line driving and when the polarity signal POL is inverted and the driving waveform G33 becomes high, a time period necessary for the electric potential of the source driver to become a desired level is longer than a fixed time period necessary for the electric potential of the source drivers to become a desired level in a state in which the polarity signal POL is fixed (Tr_B > Tr_A). Thus, for example, if Tr_B = Tr_A is set, a sufficient time period for performing an operation of writing is not obtained. Thus, as shown in Fig. 28, by setting the time period for performing an operation of writing at the 33rd gate line to be longer than other time periods for performing the operation of writing at other lines, conditions of the operation of writing are balanced. That is, it is preferable that the timings in Fig. 28 are set in such a manner that T3 > T1 and T1 = T2 = T4.

By performing setting in this way, a sufficient time period for performing the operation of writing can be obtained when the signal POL is inverted, and thus the occurrence of inconsistencies at this portion can be prevented.

Moreover, similarly, at other timings when odd-line driving is switched to even-line driving and when even-line driving is switched to odd-line driving, as a matter of course, the time period for performing the operation of writing at the first line after switching is performed should be set longer than other time periods for performing the operation of writing at other lines.

Then, furthermore, when one screen is divided into a plurality of frames, each frame may be divided into two sub-frames 1/2 and 2/2 in such a manner that an area in which odd lines are scanned and an area in which even lines are scanned do not match.

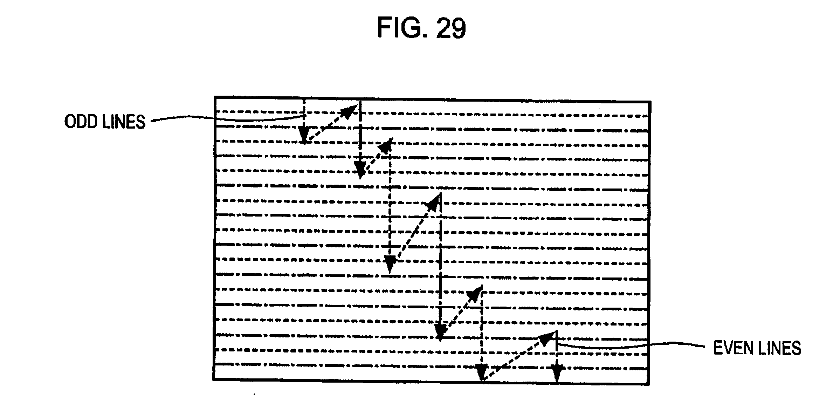

That is, as shown in Fig. 29, in the display device 51, even in the case of pixels having a multi-pixel structure or even in the case of pixels having a general structure, the position of each of the selected lines is made to be different between subsequent odd and even sub-frames and switching is performed between these sub-frames a plurality of times within one frame. In other words, in the display device 51, even in the case of pixels having a multi-pixel structure or even in the case of pixels having a general structure, the position at which the polarity signal POL changes can be set for each sub-frame in such a manner that the position for the sub-frame does not overlap the position for another sub-frame. The number of the selected lines in an odd sub-frame and the number of selected lines in an even sub-frame may be randomly set; however, for ease of control, they may be set in a predetermined regulated manner. Here, also, as the number of areas obtained as a result of division increase, a necessary capacity of a memory becomes smaller; however, the number of times the polarity inversion is performed increases and thus the power consumption increases. However, for example, if inversion is performed every two or more lines, a power-consumption reducing effect can be obtained, compared with dot inversion driving.

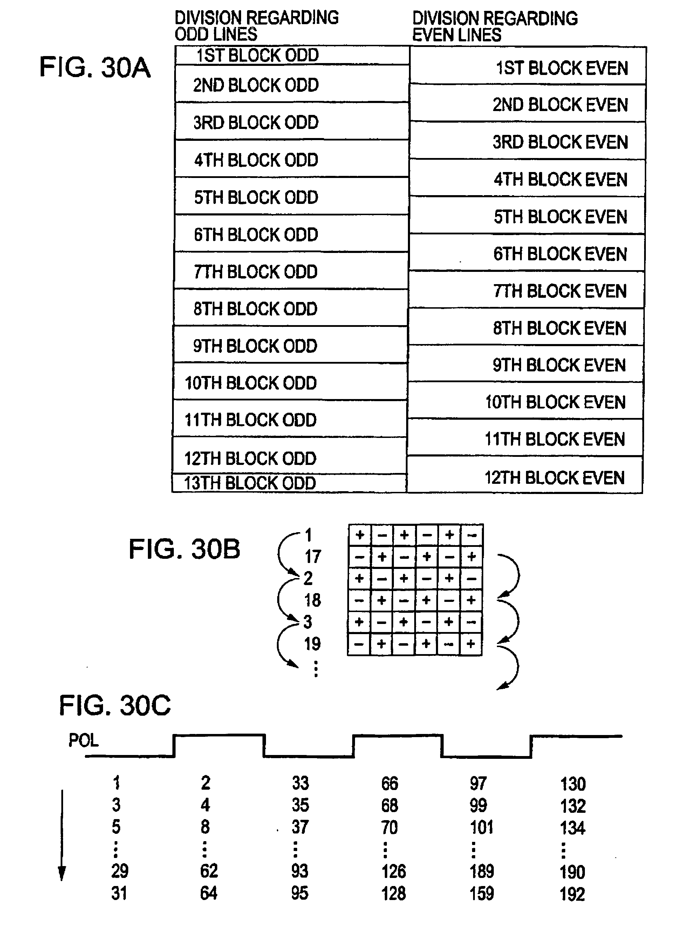

For example, as shown in Fig. 30A, when one screen is divided into twelve areas along the horizontal direction and the number of lines selected in the first odd sub-frame is half the number of the lines of one of the areas, as shown in Fig. 30B, after the first line is driven, the third line is driven and then the fifth line is driven. After 16 odd lines to the 31st line are driven, the second line, the fourth line, and so on are driven (the numbers in Fig. 30B indicate the driving order of the lines). Thus, as shown in Fig. 30C, the polarity signal POL changes 25 times, which is one time more than the case described using Figs. 26A and 26B, within one frame (the numbers in Fig. 30B indicate the line number counted from the top of the screen).

Here, even in this case, as described using Fig. 28, when odd-line driving is switched to even-line driving and when even-line driving is switched to odd-line driving, as a matter of course, it is preferable that the time period for performing the operation of writing at the first line after switching is performed is set to be longer than other time periods for performing the operation of writing at other lines.

In this way, in the case described using Fig. 30, in a frame that is divided into twelve areas, switching is performed between sub-frames in such a manner that the position of each of the selected lines is made to be different between the sub-frames, and odd lines or even lines are driven in each of the sub-frames, whereby the power consumption can be suppressed and a necessary capacity of a memory can be smaller, compared with dot inversion driving. Furthermore, positions at which the polarity signal POL changes can be dispersedly set for even lines and odd lines, and thus the inconsistencies that tend to occur at these positions can be suppressed and the LCD panel 76 can be easily controlled.

As described above, even when a half tone is displayed using pixels having a multi-pixel structure, in the display device 51, since the operation of writing is performed using a group of pixel electrodes Px1 or a group of pixel electrodes Px2 in units of a sub-frame, the changes in voltage can be suppressed, whereby the power consumption can be prevented from becoming large. For example, when a uniform tone is displayed over the entire screen, no matter which tone is displayed, electric current flows the source bus lines for a moment when switching is performed between sub-frames and this happens only two times in one frame in such a case. In this way, in the display device 51, even when a halftone is displayed using pixels having a multi-pixel structure, the effects of vertical frame inversion can be utilized to the utmost and a problem of flicker and inconsistencies in the form of vertical streaks in a moving image can be greatly reduced by the polarity arrangement obtained in a state in which driving of two sub-frames is finished.

Moreover, in the display device 51, even in the case of pixels having a multi-pixel structure or in the case of pixels having a general structure, one screen is divided into a plurality of frames along the horizontal direction, switching is performed between sub-frames in the frames, and odd lines or even lines can be driven in each of the sub-frames, whereby the power consumption can be suppressed and a necessary capacity of a memory can be smaller, compared with dot inversion driving.

Moreover, in the display device 51, even in the case of pixels having a multi-pixel structure or in the case of pixels having a general structure, the position of each of the selected lines is made to be different between subsequent odd and even sub-frames, in other words, the position at which the polarity signal POL changes can be set for each sub-frame in such a manner that the position for the sub-frame does not overlap the position for another sub-frame. Thus, compared with dot inversion driving, the power consumption can be suppressed and a necessary capacity of a memory can be smaller. Furthermore, the inconsistencies that tend to occur at positions at which the polarity signal POL changes can be suppressed and the LCD panel 76 can be easily controlled.

Here, description has been made by treating the display device 51 as a single device; however, the LCD panel 76 may be a separate device and the remaining portion may be configured as a display control device, as a matter of course.

It should be understood by those skilled in the art that various modifications, combinations, sub-combinations and alterations may occur depending on design requirements and other factors insofar as they are within the scope of the appended claims.

## Claims

1. A liquid crystal display device (51), comprising:
display means (51) including liquid crystal display elements corresponding to pixels which are arranged in matrix;
first driving means (75) arranged to drive scanning lines connected to the liquid crystal display elements corresponding to the pixels;
second driving means (111) arranged to drive signal lines connected to the liquid crystal display elements corresponding to the pixels;
image acquisition means (91) arranged to acquire an image signal to be displayed on the display means (51); and
control means (71) arranged to control the first driving means (75) and the second driving means (111) in accordance with the image signal acquired by the image acquisition means (91),
wherein the control means (71) is arranged to control the first driving means (75) in such a manner that one screen is divided into a plurality of frames, wherein all horizontal scanning lines of each frame are scanned by executing scanning of a first sub-frame in which only odd lines of horizontal scanning lines are scanned followed by scanning of a second sub-frame in which only even lines of horizontal scanning lines are scanned , and wherein each frame is divided into said first and second sub-frames in such a manner that an area in which odd lines are scanned in the first sub-frame and an area in which even lines are scanned in the second sub-frame do not match, wherein
the control means (71) is arranged to control the second driving means (111) in such a manner that a polarity signal is inverted when switching is performed between the first sub-frame and the second sub-frame,
**characterized in that**
a time period for performing an operation of writing at the first horizontal scanning line after switching is performed between the first sub-frame and the second sub-frame is set to be longer than a time period for performing the operation of writing at another horizontal scanning line, and
a number of horizontal scanning lines in the first sub-frame and a number of horizontal scanning lines in the second sub-frame are randomly set.

2. A liquid crystal display method for a liquid crystal display device which includes
display means (51) including liquid crystal display elements corresponding to pixels which are arranged in matrix;
first driving means (75) arranged to drive scanning lines connected to the liquid crystal display elements corresponding to the pixels; and
second driving means (111) arranged to drive signal lines connected to the liquid crystal display elements corresponding to the pixels, the liquid crystal display method comprising the steps of:
acquiring an image signal to be displayed on the display means (51); and
when the first driving means (75) and the second driving means (111) are controlled in accordance with the acquired image signal,
controlling the first driving means (75) and the second driving means (111) in such a manner that one screen is divided into a plurality of frames, wherein all horizontal scanning lines of each frame are scanned by executing scanning of a first sub-frame in which only odd lines of horizontal scanning lines are scanned followed by scanning of a second sub-frame in which only even lines of horizontal scanning lines are scanned, and wherein each frame is divided into said first and second sub-frames in such a manner that an area in which odd lines are scanned in the first sub-frame and an area in which even lines are scanned in the second sub-frame do not match, wherein further a polarity signal is inverted when switching is performed between the first sub-frame and the second sub-frame, **characterized in that**
a time period for performing an operation of writing at the first horizontal scanning line after switching is performed between the first sub-frame and the second sub-frame is set to be longer than a time period for performing the operation of writing at another horizontal scanning line, and
a number of horizontal scanning lines in the first sub-frame and a number of horizontal scanning lines in the second sub-frame are randomly set.

## Patentansprüche

1. Flüssigkristallanzeigevorrichtung (51), umfassend:
ein Anzeigemittel (51), das Flüssigkristallanzeigeelemente aufweist, die Bildpunkten entsprechen, welche in einer Matrix angeordnet sind;
ein erstes Ansteuerungsmittel (75), das dafür ausgelegt ist, Abtastzeilen anzusteuern, die mit den Flüssigkristallanzeigeelementen verbunden sind, welche den Bildpunkten entsprechen;
ein zweites Ansteuerungsmittel (111), das dafür ausgelegt ist, Signalzeilen anzusteuern, die mit den Flüssigkristallanzeigeelementen verbunden sind, welche den Bildpunkten entsprechen;
ein Bilderfassungsmittel (91), das dafür ausgelegt ist, ein Bildsignal zu erfassen, das auf dem Anzeigemittel (51) angezeigt werden soll; und
ein Steuermittel (71), das dafür ausgelegt ist, das erste Ansteuerungsmittel (75) und das zweite Ansteuerungsmittel (111) entsprechend dem von dem Bilderfassungsmittel (91) erfassten Bildsignal zu steuern,
wobei das Steuermittel (71) dafür ausgelegt ist, das erste Ansteuerungsmittel (75) derart zu steuern, dass ein Bildschirm in eine Mehrzahl von Rahmen unterteilt wird, wobei alle horizontalen Abtastzeilen jedes Rahmens abgetastet werden, indem eine Abtastung eines ersten Teilrahmens ausgeführt wird, in dem nur ungerade Zeilen von horizontalen Abtastzeilen abgetastet werden, gefolgt von einer Abtastung eines zweiten Teilrahmens, in dem nur gerade Zeilen von horizontalen Abtastzeilen abgetastet werden, und
wobei jeder Rahmen derart in den ersten und den zweiten Teilrahmen unterteilt ist, dass ein Bereich, in dem ungerade Zeilen in dem ersten Teilrahmen abgetastet werden, und ein Bereich, in dem gerade Zeilen in dem zweiten Teilrahmen abgetastet werden, nicht übereinstimmen, wobei
das Steuermittel (71) dafür ausgelegt ist, das zweite Ansteuerungsmittel (111) derart zu steuern, dass ein Polaritätssignal umgekehrt wird, wenn eine Umschaltung zwischen dem ersten Teilrahmen und dem zweiten Teilrahmen ausgeführt wird,
**dadurch gekennzeichnet, dass**
ein Zeitraum zum Ausführen eines Schreibvorgangs an der ersten horizontalen Abtastlinie, nachdem eine Umschaltung zwischen dem ersten Teilrahmen und dem zweiten Teilrahmen ausgeführt worden ist, länger eingestellt wird als ein Zeitraum zum Ausführen des Schreibvorgangs an einer anderen horizontalen Abtastlinie, und
eine Anzahl horizontaler Abtastlinien in dem ersten Teilrahmen und eine Anzahl horizontaler Abtastlinien in dem zweiten Teilrahmen willkürlich festgelegt sind.

2. Flüssigkristallanzeigeverfahren für eine Flüssigkristallanzeigevorrichtung, die Folgendes aufweist:
ein Anzeigemittel (51), das Flüssigkristallanzeigeelemente aufweist, die Bildpunkten entsprechen, welche in einer Matrix angeordnet sind;
ein erstes Ansteuerungsmittel (75), das dafür ausgelegt ist, Abtastzeilen anzusteuern, die mit den Flüssigkristallanzeigeelementen verbunden sind, welche den Bildpunkten entsprechen; und
ein zweites Ansteuerungsmittel (111), das dafür ausgelegt ist, Signalzeilen anzusteuern, die mit den Flüssigkristallanzeigeelementen verbunden sind, welche den Bildpunkten entsprechen, wobei das Flüssigkristallanzeigeverfahren folgende Schritte umfasst:
Erfassen eines auf dem Anzeigemittel (51) anzuzeigenden Bildsignals; und
wenn das erste Ansteuerungsmittel (75) und das zweite Ansteuerungsmittel (111) entsprechend dem erfassten Bildsignal gesteuert werden,
Steuern des ersten Ansteuerungsmittels (75) und des zweiten Ansteuerungsmittels (111) derart, dass ein Bildschirm in eine Mehrzahl von Rahmen unterteilt wird, wobei alle horizontalen Abtastzeilen jedes Rahmens abgetastet werden, indem eine Abtastung eines ersten Teilrahmens ausgeführt wird, in dem nur ungerade Zeilen von horizontalen Abtastzeilen abgetastet werden, gefolgt von einer Abtastung eines zweiten Teilrahmens, in dem nur gerade Zeilen von horizontalen Abtastzeilen abgetastet werden, und wobei jeder Rahmen derart in den ersten und den zweiten Teilrahmen unterteilt ist, dass ein Bereich, in dem ungerade Zeilen in dem ersten Teilrahmen abgetastet werden, und ein Bereich, in dem gerade Zeilen in dem zweiten Teilrahmen abgetastet werden, nicht übereinstimmen, wobei ferner ein Polaritätssignal umgekehrt wird, wenn eine Umschaltung zwischen dem ersten Teilrahmen und dem zweiten Teilrahmen ausgeführt wird,
**dadurch gekennzeichnet, dass**
ein Zeitraum zum Ausführen eines Schreibvorgangs an der ersten horizontalen Abtastlinie, nachdem eine Umschaltung zwischen dem ersten Teilrahmen und dem zweiten Teilrahmen ausgeführt worden ist, länger eingestellt wird als ein Zeitraum zum Ausführen des Schreibvorgangs an einer anderen horizontalen Abtastlinie, und
eine Anzahl horizontaler Abtastlinien in dem ersten Teilrahmen und eine Anzahl horizontaler Abtastlinien in dem zweiten Teilrahmen willkürlich festgelegt sind.

## Revendications

1. Dispositif d'affichage à cristaux liquides (51), comprenant :
un moyen d'affichage (51) comportant des éléments d'affichage à cristaux liquides correspondant à des pixels agencés en matrice ;
un premier moyen d'attaque (75) conçu pour attaquer des lignes de balayage reliées aux éléments d'affichage à cristaux liquides correspondant aux pixels ;
un second moyen d'attaque (111) conçu pour attaquer des lignes de signaux reliées aux éléments d'affichage à cristaux liquides correspondant aux pixels ;
un moyen d'acquisition d'image (91) conçu pour acquérir un signal image à afficher sur le moyen d'affichage (51) ; et
un moyen de commande (71) conçu pour commander le premier moyen d'attaque (75) et le second moyen d'attaque (111) conformément au signal image acquis par le moyen d'acquisition d'image (91),
dans lequel le moyen de commande (71) est conçu pour commander le premier moyen d'attaque (75) de manière à ce qu'un écran soit subdivisé en une pluralité de trames, toutes les lignes de balayage horizontal de chaque trame étant balayées en exécutant un balayage d'une première sous-trame où seules des lignes impaires de lignes de balayage horizontal sont balayées suivi d'un balayage d'une seconde sous-trame où seules des lignes paires de lignes de balayage horizontal sont balayées, et chaque trame étant subdivisée en lesdites première et seconde sous-trames de manière à ce qu'une région où des lignes impaires sont balayées dans la première sous-trame et une région où des lignes paires sont balayées dans la seconde sous-trame ne se correspondent pas,
dans lequel le moyen de commande (71) est conçu pour commander le second moyen d'attaque (111) de manière à ce qu'un signal de polarité soit inversé lors de l'exécution d'une commutation entre la première sous-trame et la seconde sous-trame,
**caractérisé en ce que**
un intervalle de temps pour l'exécution d'une opération d'écriture à la première ligne de balayage horizontal suite à l'exécution de la commutation entre la première sous-trame et la seconde sous-trame est fixé de manière à être plus long qu'un intervalle de temps pour l'exécution de l'opération d'écriture à une autre ligne de balayage horizontal, et
un nombre de lignes de balayage horizontal dans la première sous-trame et un nombre de lignes de balayage horizontal dans la seconde sous-trame sont fixés de façon aléatoire.

2. Procédé d'affichage à cristaux liquides pour un dispositif d'affichage à cristaux liquides qui comporte
un moyen d'affichage (51) comportant des éléments d'affichage à cristaux liquides correspondant à des pixels agencés en matrice ;
un premier moyen d'attaque (75) conçu pour attaquer des lignes de balayage reliées aux éléments d'affichage à cristaux liquides correspondant aux pixels ; et
un second moyen d'attaque (111) conçu pour attaquer des lignes de signaux reliées aux éléments d'affichage à cristaux liquides correspondant aux pixels, le procédé d'affichage à cristaux liquides comprenant les étapes consistant à :
acquérir un signal image à afficher sur le moyen d'affichage (51) ; et
lorsque le premier moyen d'attaque (75) et le second moyen d'attaque (111) sont commandés conformément au signal image acquis,
commander le premier moyen d'attaque (75) et le second moyen d'attaque (111) de manière à ce qu'un écran soit subdivisé en une pluralité de trames, toutes les lignes de balayage horizontal de chaque trame étant balayées en exécutant un balayage d'une première sous-trame où seules des lignes impaires de lignes de balayage horizontal sont balayées suivi d'un balayage d'une seconde sous-trame où seules des lignes paires de lignes de balayage horizontal sont balayées, et chaque trame étant subdivisée en lesdites première et seconde sous-trames de manière à ce qu'une région où des lignes impaires sont balayées dans la première sous-trame et une région où des lignes paires sont balayées dans la seconde sous-trame ne se correspondent pas, un signal de polarité étant par ailleurs inversé lors de l'exécution d'une commutation entre la première sous-trame et la seconde sous-trame,
**caractérisé en ce que**
un intervalle de temps pour l'exécution d'une opération d'écriture à la première ligne de balayage horizontal suite à l'exécution de la commutation entre la première sous-trame et la seconde sous-trame est fixé de manière à être plus long qu'un intervalle de temps pour l'exécution de l'opération d'écriture à une autre ligne de balayage horizontal, et
un nombre de lignes de balayage horizontal dans la première sous-trame et un nombre de lignes de balayage horizontal dans la seconde sous-trame sont fixés de façon aléatoire.
